# EUROPEAN PATENT APPLICATION

(11) **EP 1 586 487 A2**
(43) Date of publication of application: **19.10.2005**
(21) Application number: 05006449.2
(22) Date of filing: 23.03.2005
(51) Int. Cl.: B60R 16/02

(54) **Power supply apparatus for vehicle**

(30) Priority: 14.04.2004 JP 2004119358
(71) Applicant: Toyota Jidosha Kabushiki Kaisha, Toyota-shi, Aichi-ken 471-8571 (JP)
(72) Inventor: Watanabe, Ko, Toyota-shi Aichi-ken, 471-8571 (JP); Nagase, Syuji, Sagamihara-shi Kanagawa-ken, 229-1131 (JP)
(74) Representative: TBK-Patent

(57) **Abstract**

In a hybrid car using a high voltage battery (12) in combination with an auxiliary machinery battery (16) both arranged in a rear portion of a vehicle, a fusible link box (18) is provided in the vicinity of the 12V auxiliary machinery battery (16). A power line (38) serving as an output line from a DC/DC converter (14) converting a voltage between the high voltage battery (12) and the battery (16) is not returned to an engine room but connected to the fusible link box (18). An EFI unit (24) of high importance should maintain its operation even when a fusible link (44) is blown due to flow of an excessive current when the battery (16) is charged from the DC/DC converter (14). Here, a power line (34) and a fusible link (42) are dedicated to the EFI unit (24) consuming relatively small power, so that a path for routing the power line (34) is more readily ensured.

## Description

This nonprovisional application is based on Japanese Patent Application No. 2004-119358 filed with the Japan Patent Office on April 14, 2004, the entire contents of which are hereby incorporated by reference.

### BACKGROUND OF THE INVENTION

### Field of the Invention

The present invention relates to a power supply apparatus for a vehicle, and more particularly to a power supply apparatus for a vehicle using a high voltage power supply in combination with a low voltage power supply.

### Description of the Background Art

Japanese Patent Laying Open No. 2001-229738 discloses a power supply circuit for a vehicle using two batteries of a 42V battery and a 14V battery in combination. In a 14V battery, a voltage of 14V is normally used as a charge voltage, and the 14V battery is also referred to as a 12V battery from a viewpoint of its output voltage.

In the power supply circuit for a vehicle, a rated power consumption of a 42V drive type motor is equivalent to that of a conventional 14V drive type motor. If the power is equal, a rated maximum current value is lowered by employing a 42V drive voltage system adapted to a higher voltage instead of a 14V drive voltage system. Accordingly, a power supply line for connection can be thinner. As the line is thinner, a power line for motor that has conventionally been thick can have a thickness equal to that of a power line for a load consuming less power than the motor.

In recent years, an electric car incorporating a large capacity battery attaining a power supply voltage of several hundred volts and utilizing electric power stored in the battery to run a drive motor and a hybrid car employing a battery in combination with a gasoline engine have been put into practical use.

In such a vehicle, an inverter is carried in an engine room located forward of a passenger seat. Accordingly, a 12V battery for auxiliary machinery should be moved to a trunk room behind the passenger seat due to difficulty in finding a room for the battery in a front portion.

In addition, a high voltage battery of a large capacity is arranged behind the passenger seat, and the auxiliary machinery battery is connected to the high voltage battery through a DC/DC converter.

In a vehicle in which a load is arranged in the engine room in the front portion of the vehicle and a power supply is arranged in a trunk in a rear portion of the same, how to ensure a space for a power line in order to supply electric power from the power supply located in the rear portion of the vehicle to the load arranged in the front portion of the same is an issue.

### SUMMARY OF THE INVENTION

An object of the present invention is to provide a power supply apparatus for a vehicle in which a path for a power line cable routed in the vehicle is readily ensured.

In summary, the present invention is directed to a power supply apparatus for a vehicle, including: a first power supply arranged in a rear region behind a passenger seat in the vehicle; a branch portion arranged in the rear region and having an input terminal connected to the first power supply, in which a current path branches off at least to first and second branch terminals; a first power line having one end connected to the first branch terminal; a first load circuit arranged in a front region forward of the passenger seat and connected to the other end of the first power line; a second power line having one end connected to the second branch terminal; and a second load circuit arranged in the front region and connected to the other end of the second power line.

Preferably, the power supply apparatus for a vehicle further includes a second power supply arranged in the rear region and supplying a power supply voltage higher than a power supply voltage of the first power supply, and a voltage converter arranged in the rear region and connected between the second power supply and the second branch terminal so as to carry out voltage conversion. The first power line has a diameter smaller than the second power line.

More preferably, the first load circuit consumes power less than the second load circuit, and the branch portion includes a first fusible link connected between the input terminal and the first branch terminal and having a current-carrying capacity adapted to power consumption in the first load circuit, and a second fusible link connected between the input terminal and the second branch terminal and having a current-carrying capacity adapted to power consumption in the second load circuit.

Preferably, the rear region is a trunk room, and the front region is an engine room.

Preferably, the first load circuit includes an electronic control unit for engine control, the second load circuit includes a plurality of load circuits, and the power supply apparatus for a vehicle further includes a second branch portion arranged in the front region and distributing electric power on the second power line to the plurality of load circuits.

More preferably, the second branch portion has a plurality of fusible links corresponding to the plurality of load circuits respectively.

Therefore, a primary advantage of the present invention is that a certain power line can have a smaller diameter and a path for routing the power line cable is more readily ensured.

Another advantage of the present invention is that the total number of fusible links can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates arrangement of each element in a power supply apparatus for a vehicle according to the present invention.
Fig. 2 illustrates connection in the power supply apparatus for a vehicle according to the present invention.
Fig. 3 illustrates specific arrangement of a fusible link box 18.
Fig. 4 illustrates a reference example of arrangement and connection of a power line in a hybrid car.

### DESCRIPTION OF THE PREFERRED EMBODIMENTS

An embodiment of the present invention will be described hereinafter in detail with reference to the drawings. The same or corresponding elements have the same reference characters allotted. Therefore, detailed description thereof will not be repeated.

### [Reference Example]

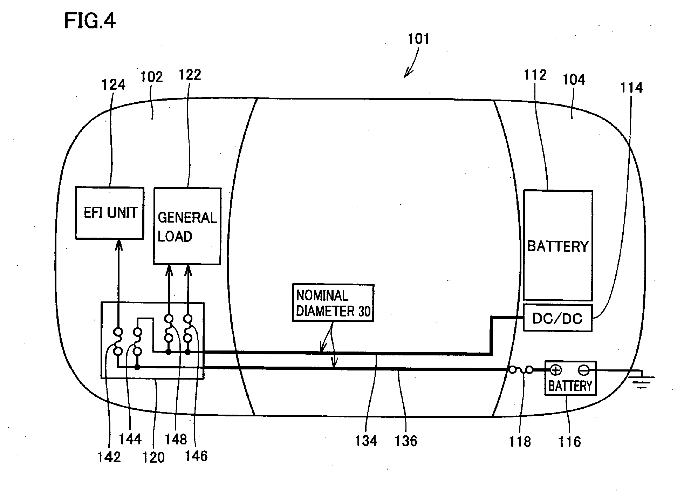

Fig. 4 illustrates a reference example of arrangement and connection of a power line in a hybrid car.

Referring to Fig. 4, a vehicle 101 includes an engine room 102 and a trunk room 104 in the front and the rear of the passenger seat, respectively. In engine room 102, an EFI unit 124, a general load 122, and a fusible link box 120 for supplying electric power to EFI unit 124 and general load 122 in a branched manner are arranged. Examples of general load 122 include lamps such as a headlight, audio equipment, or a motor for driving a power window.

Though not shown, in engine room 102, an engine, a motor-generator, an inverter for driving the motor-generator, and the like are also arranged.

Vehicle 101 contains in trunk room 104, a high voltage battery 112 for supplying the inverter with electric power for driving the motor, a DC/DC converter 114 converting a voltage from battery 112 to 12V, and a 12V battery 16 for auxiliary machinery.

A negative terminal of battery 116 is connected to the ground, while a positive terminal is connected to a power line 136 through a fusible link 118. DC/DC converter 114 has an output connected to a power line 134. Power lines 134 and 136 have a large thickness, i.e., a nominal size 30 (φ 11.5mm).

Power lines 134 and 136 are routed from the trunk room in the rear portion of the vehicle toward fusible link box 120 in the engine room in the front portion of the same. Fusible link box 120 includes a fusible link 144 connected between one end of power line 134 and one end of power line 136, a fusible link 142 connected between one end of power line 136 and EFI unit 124, and fusible links 146, 148 connected between one end of power line 134 and respective ones of a plurality of loads included in general load 122.

Fusible link 144 is necessary in order to avoid engine stop due to blow of fusible link 118 when power line 134 is short-circuited. As a whole, a total of five fusible links are necessary between each load circuit and the power line.

In addition, a voltage of 12V is supplied as a power supply voltage to general load 122 and EFI unit 124. The power supply voltage is sometimes supplied from battery 116, and sometimes supplied from DC/DC converter 114.

Accordingly, both of power lines 134 and 136 should be thick enough for a current sufficient for driving general load 122 to flow. In other words, two thick power lines, i.e., not only power line 136 supplying electric power from battery 116 to the engine room but also power line 134 for supplying electric power from DC/DC converter 114 to the engine room, should be routed in a body of the vehicle.

### [Embodiment of the Present Invention]

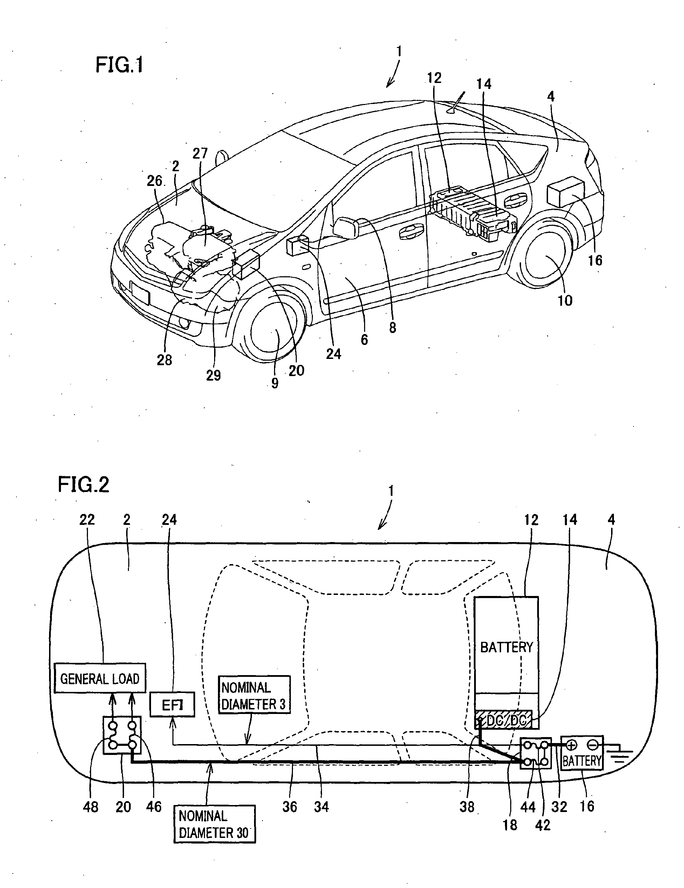

Fig. 1 illustrates arrangement of each element in the power supply apparatus for a vehicle according to the present invention.

Fig. 2 illustrates connection in the power supply apparatus for a vehicle according to the present invention.

Referring to Figs. 1 and 2, a vehicle 1 has an engine room 2 and a trunk room 4 in the front and the rear of the passenger seat, respectively.

Vehicle 1 is a hybrid car using an engine serving as an internal combustion engine in combination with a motor driven by a battery. In engine room 2, an engine 26, motor-generators 28, 29, and an inverter 27 supplying/receiving three-phase AC power to/from motor-generators 28, 29 are arranged.

Motor-generator 28 mainly operates as a generator generating electric power as a result of rotation of the engine. Meanwhile, motor-generator 29 mainly operates as a motor driving a front wheel 9 together with engine 26. In regenerative braking, however, motor-generator 28 operates as a generator generating electric power.

A fusible link box 20 serving as a branch portion accommodating fusible links and distributing electric power is arranged on a side of inverter 27 within engine room 2. In addition, a side mirror 8 is provided on a door 6 on the left when viewed in a forward direction, and an EFI unit 24 is arranged in engine room 2 forward of side mirror 8.

On a floor behind a not-shown backseat, a battery pack is arranged, which contains a battery 12 and a DC/DC converter 14. In addition, a 12V battery 16 for auxiliary machinery is arranged in trunk room 4 above and in the vicinity of a rear wheel 10.

A negative terminal of battery 16 is connected to the ground. A fusible link box 18 which serves as a branch portion accommodating fusible links and distributing electric power is arranged in the proximity of battery 16. Fusible link box 18 is connected to a positive terminal of battery 16 through a power line 32.

Fusible link box 18 contains fusible links 42, 44. One ends of fusible links 42, 44 are both connected to power line 32.

The other end of fusible link 44 is connected to an output of DC/DC converter 14 through a power line 38, as well as to fusible link box 20 through a power line 36. Power lines 36, 38 have a nominal size 30 (φ11.5mm), which is sufficient for a large current to flow.

Fusible link 44 protects power lines 36, 38 against excessive current that may be produced if power line 36 or power line 38 is short-circuited.

The other end of fusible link 42 is connected to EFI unit 24 through a power line 34. Power line 34 has a nominal size 3 (φ4.1mm), because power consumption of EFI unit 24 is smaller than that of general load 22 such as a lamp. Therefore, the thickness of power line 34 and an allowable current amount of fusible link 42 are determined in accordance with power consumption of EFI 24. In addition, it is also necessary to supply electric power to EFI unit 24 through an independent path, in order to avoid engine stop even if fusible link 44 is blown when excessive current is produced due to short-circuit of power line 36 or power line 38.

Fusible link box 20 contains fusible links 46, 48. One end of power line 36 is connected through fusible links 46, 48 to the corresponding load among a plurality of loads included in general load 22. An allowable current amount of fusible links 46, 48 is determined in accordance with the corresponding load, while the thickness of power line 36 and an allowable current amount of fusible link 44 are determined in accordance with a total current of general load 22.

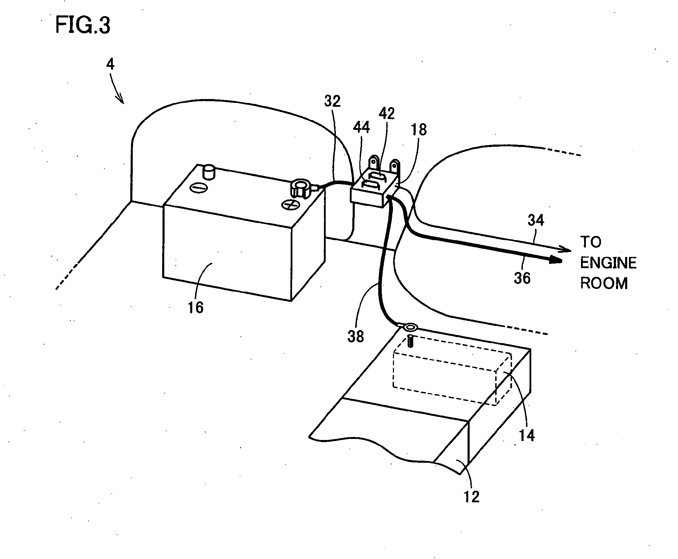

Fig. 3 illustrates specific arrangement of fusible link box 18.

Referring to Fig. 3, 12V battery 16 for auxiliary machinery is arranged in trunk room 4, and fusible link box 18 is screwed to a sidewall of trunk room 4 in the vicinity of the positive terminal of battery 16.

Power line 32 has one end connected to the positive terminal of battery 16, and the other end connected to fusible link box 18. One ends of power lines 38 and 36 are connected to the other end of power line 32 through fusible link 44. The other end of power line 38 is screwed to the output of DC/DC converter 14 within the battery pack. The other end of power line 36 is connected to fusible link box 20 within the engine room.

The other end of power line 32 is connected to one end of power line 34 through fusible link 42. The other end of power line 34 is routed to the engine room, and connected to EFI 24.

Even if fusible link 44 is blown due to short-circuit of power line 36 or power line 38, a power supply voltage is supplied to EFI unit 24 through fusible link 42 and power line 34. Therefore, the engine can continue to run.

As compared with the reference example shown in Fig. 4, power line 34 is routed in a manner dedicated to EFI unit 24. Accordingly, a nominal diameter can be made smaller, and the path for routing the power line can be ensured more readily than in Fig. 4.

In addition, the fusible link used for protection of both of power lines 36 and 38 and the fusible link for protecting power line 34 are provided in the proximity of battery 16, so that the total number of fusible links can be reduced.

In the present embodiment, EFI unit 24 has exemplarily been shown as an electric load of high importance in running of the vehicle, and the power line to EFI unit 24 has been routed via a path different from that for general load 22. The electric load of high importance in running of the vehicle, however, is not limited to EFI unit 24, and the power line to such a load may be routed via a path different from that for general load 22.

Moreover, the present invention has been applied to a hybrid car in the present embodiment, however, the present invention is also applicable to an electric car.

Although the present invention has been described and illustrated in detail, it is clearly understood that the same is by way of illustration and example only and is not to be taken by way of limitation, the spirit and scope of the present invention being limited only by the terms of the appended claims.

In a hybrid car using a high voltage battery (12) in combination with an auxiliary machinery battery (16) both arranged in a rear portion of a vehicle, a fusible link box (18) is provided in the vicinity of the 12V auxiliary machinery battery (16). A power line (38) serving as an output line from a DC/DC converter (14) converting a voltage between the high voltage battery (12) and the battery. (16) is not returned to an engine room but connected to the fusible link box (18). An EFI unit (24) of high importance should maintain its operation even when a fusible link (44) is blown due to now of an excessive current when the battery (16) is charged from the DC/DC converter (14). Here, a power line (34) and a fusible link (42) are dedicated to the EFI unit (24) consuming relatively small power, so that a path for routing the power line (34) is more readily ensured.

## Claims

1. A power supply apparatus for a vehicle, comprising:
a first power supply (16) arranged in a rear region behind a passenger seat in the vehicle;
a branch portion (18) arranged in said rear region and having an input terminal connected to said first power supply, in which a current path branches off at least to first and second branch terminals;
a first power line (34) having one end connected to said first branch terminal;
a first load circuit (24) arranged in a front region forward of said passenger seat and connected to the other end of said first power line;
a second power line (36) having one end connected to said second branch terminal; and
a second load circuit (22) arranged in said front region and connected to the other end of said second power line.

2. The power supply apparatus for a vehicle according to claim 1, further comprising:
a second power supply (12) arranged in said rear region and supplying a power supply voltage higher than a power supply voltage of said first power supply; and
a voltage converter (14) arranged in said rear region and connected between said second power supply and said second branch terminal so as to carry out voltage conversion; wherein
said first power line has a diameter smaller than said second power line.

3. The power supply apparatus for a vehicle according to claim 2, wherein
said first load circuit consumes power less than said second load circuit, and
said branch portion includes
a first fusible link (42) connected between said input terminal and said first branch terminal and having a current-carrying capacity adapted to power consumption in said first load circuit, and
a second fusible link (44) connected between said input terminal and said second branch terminal and having a current-carrying capacity adapted to power consumption in said second load circuit.

4. The power supply apparatus for a vehicle according to claim 1, wherein said rear region is a trunk room (4), and
said front region is an engine room (2).

5. The power supply apparatus for a vehicle according to claim 1, wherein said first load circuit includes an electronic control unit for engine control,
said second load circuit includes a plurality of load circuits, and
said power supply apparatus for a vehicle further comprises a second branch portion (20) arranged in said front region and distributing electric power on said second power line to said plurality of load circuits.

6. The power supply apparatus for a vehicle according to claim 5, wherein
said second branch portion has a plurality of fusible links (46, 48) corresponding to said plurality of load circuits respectively.
